# FASCICULE DE BREVET EUROPEEN

(11) **EP 3 083 131 B1**
(45) Date de publication et mention de la délivrance du brevet: **13.06.2018**
(21) Numéro de dépôt: 14828238.7
(22) Date de dépôt: 18.12.2014
(51) Int. Cl.: B23P 15/00, A47J 36/02, A47J 36/06, A47J 27/00, B21D 51/22, A47J 37/00

(54) **USTENSILE DE CUISSON COMPORTANT UNE FACE EXTÉRIEURE EN ACIER INOXYDABLE TEXTURÉE**
KOCHGESCHIRR MIT STRUKTURIERTER AUSSENFLÄCHE AUS ROSTFREIEM STAHL
ITEM OF COOKWARE HAVING A TEXTURED OUTER FACE MADE OF STAINLESS STEEL

(30) Priorité: 19.12.2013 FR 1363078
(43) Date de publication de la demande: 26.10.2016
(73) Titulaire: SEB S.A., 69130 Ecully (FR)
(72) Inventeur: ALLEMAND, Simon, F-74960 Cran Gevrier (FR); MEYER, Mickaël, F-74150 Rumilly (FR); TUFFE, Stéphane, F-73160 Cognin (FR)
(74) Mandataire: Cémeli, Eric Philippe Laurent
(86) Numéro de dépôt international: PCT/FR2014/053407
(87) Numéro de publication internationale: WO 2015/092288

(56) Documents cités:
- EP-A1- 2 138 079
- EP-A2- 0 247 932
- FR-A1- 2 808 732
- JP-A- H05 245 047
- KR-A- 20090 098 398
- KR-A- 20140 029 612
- US-A1- 2004 149 142

## Description

La présente invention concerne le domaine technique des ustensiles de cuisson en acier inoxydable.

La présente invention se rapporte plus particulièrement aux ustensiles de cuisson obtenus par emboutissage à partir d'une tôle d'acier inoxydable, ainsi qu'à leur procédé d'obtention.

La présente invention concerne notamment les articles culinaires prévus pour être disposés sur un foyer de chauffe, tels que par exemple les poêles ou les casseroles.

La présente invention concerne également les couvercles de cuisson ainsi que les cuves amovibles d'appareils électriques de cuisson.

Il est connu de réaliser des ustensiles de cuisson en acier inoxydable par emboutissage. Lors de l'emboutissage, des défauts peuvent apparaître sur la surface de l'ustensile, notamment sur la surface extérieure. Le phénomène de cordage (ou « roping ») se rencontre principalement dans les aciers inoxydables ferritiques et concerne principalement la paroi latérale de l'ustensile. Le phénomène de peau d'orange peut intervenir principalement sur l'arrondi reliant le fond à la paroi latérale de l'ustensile, et dans une moindre mesure sur le fond. Pour masquer les défauts précités, il est nécessaire de prévoir un polissage prononcé de la face extérieure.

Le document GB 2 076 708 propose de réaliser un article culinaire comportant une face extérieure texturée. Toutefois cette face extérieure est réalisée en aluminium ou en cuivre. Ce document envisage l'utilisation d'acier inoxydable pour réaliser la face intérieure d'un article culinaire réalisé en colaminé.

Le document KR 20100100513 propose de réaliser un article culinaire en acier inoxydable comportant une face texturée. Toutefois cette face texturée est une face intérieure revêtue.

Un procédé d'obtention d'un ustensile de cuisson selon le préambule de la revendication 1 et un ustensile de cuisson selon le préambule de la revendication 10 sont connus du document KR2009/0098398.

Un objet de la présente invention est de proposer un procédé de fabrication d'un ustensile de cuisson comportant une face extérieure emboutie en acier inoxydable, qui permette de simplifier les opérations de polissage de ladite face extérieure, sans dégrader l'aspect extérieur de l'ustensile de cuisson.

Un autre objet de la présente invention est de proposer un ustensile de cuisson comportant une face extérieure emboutie en acier inoxydable qui soit moins sensible aux rayures.

Ces objets sont atteints avec un procédé d'obtention d'un ustensile de cuisson, comprenant les étapes suivantes :
- Réalisation ou fourniture d'un flanc à partir d'une tôle d'acier inoxydable texturée présentant au moins une face texturée,
- Emboutissage du flanc pour former une calotte comportant une face intérieure et une face extérieure, la face extérieure présentant une paroi circonférentielle incurvée convexe, la face extérieure présentant des parties en relief correspondant à la face texturée du flanc,
- Optionnellement, recouvrement partiel de la face extérieure de la calotte,
- Traitement mécanique de finition de la surface libre de la face extérieure de la calotte, pour laisser apparaître l'acier inoxydable sur les parties en relief de la surface libre de la face extérieure de la calotte,
du fait que la face extérieure de la calotte présente une surface libre texturée s'étendant sur la paroi circonférentielle incurvée convexe.

L'utilisation de la face texturée d'une tôle d'acier inoxydable pour réaliser la face extérieure d'une calotte d'ustensile de cuisson permet de masquer les défauts apparaissant lors de la fabrication, notamment lors de l'emboutissage.

Un aspect de surface satisfaisant de la surface libre de la face extérieure peut être obtenu avec un traitement mécanique de finition, alors qu'avec une face extérieure lisse un pré-polissage de l'acier inoxydable est nécessaire.

Selon un mode de réalisation, le traitement mécanique de finition comporte un polissage de finition de type avivage, sans phase de pré-polissage utilisant des particules abrasives. Le masquage des défauts permet de rendre inutile la phase de pré-polissage de l'acier inoxydable, ce qui contribue à raccourcir les délais de fabrication et à limiter les résidus et effluents de polissage.

Selon une forme de réalisation permettant d'obtenir une surface extérieure colorée, le procédé consiste à utiliser une tôle d'acier inoxydable texturée comportant sur la face texturée une couche d'oxyde superficielle procurant une coloration interférentielle, et à réaliser le traitement mécanique de finition pour retirer la couche d'oxyde superficielle sur les parties en relief de la surface libre de la face extérieure de la calotte, de manière à laisser apparaitre l'acier inoxydable. Ces dispositions permettent de protéger les parties colorées de la surface restée libre de la face extérieure de la calotte.

Selon un autre mode de réalisation, le procédé consiste à réaliser un revêtement extérieur sur la surface libre de la face extérieure de la calotte, et le traitement mécanique de finition comporte un brossage pour retirer le revêtement extérieur sur les parties en relief de la surface libre de la face extérieure de la calotte. Ces dispositions permettent également de protéger les parties revêtues de la surface restée libre de la face extérieure de la calotte.

Selon une forme de réalisation adaptée à la réalisation d'ustensiles de cuisson prévus pour reposer sur une plaque de chauffe, le procédé consiste à réaliser un assemblage par frappe à chaud de la calotte avec une plaque de diffusion thermique en aluminium recouvrant partiellement la face extérieure de la calotte, et à effectuer le traitement mécanique de finition après l'assemblage par frappe à chaud.

Avantageusement, le procédé consiste à réaliser un assemblage par frappe à chaud de la calotte avec une plaque de diffusion thermique en aluminium recouvrant partiellement la face extérieure de la calotte et avec une plaque de fond en acier inoxydable recouvrant la plaque de diffusion thermique, et à effectuer le traitement mécanique de finition après l'assemblage par frappe à chaud.

Avantageusement alors, pour obtenir un ustensile de cuisson compatible avec un chauffage par induction, la plaque de fond est en acier inoxydable ferritique.

Avantageusement encore, le procédé consiste à réaliser un revêtement intérieur sur la face intérieure de la calotte avant le traitement mécanique de finition.

Avantageusement alors, le procédé consiste à réaliser le revêtement intérieur sur la face intérieure de la calotte après l'assemblage par frappe à chaud de la calotte avec la plaque de diffusion.

Selon une disposition avantageuse, le procédé consiste à utiliser un flanc circulaire formant un disque. D'autres géométries peuvent toutefois être envisagées.

Ces objets sont atteints également avec un ustensile de cuisson comportant une calotte emboutie en acier inoxydable présentant une face intérieure et une face extérieure, la face extérieure de la calotte présentant une surface libre texturée, la face extérieure présente une paroi circonférentielle incurvée convexe, du fait que la surface libre texturée s'étend sur la paroi circonférentielle incurvée convexe et que la surface libre texturée comporte des parties proéminentes polies en acier inoxydable et des parties en creux. Cette disposition permet de masquer les défauts mécaniques apparaissant au cours de la durée de vie de l'ustensile de cuisson, notamment des rayures réalisées avec un ustensile métallique tel que par exemple une spatule, ou encore avec un matériau abrasif tel qu'un tampon type Scotch-Brite™. Cette disposition permet aussi de rendre moins visibles les défauts mécaniques générés par l'opération d'emboutissage de la calotte. La surface libre texturée ne recouvre toutefois pas nécessairement l'ensemble de la paroi circonférentielle incurvée convexe. Cette disposition permet de masquer les défauts mécaniques apparaissant au cours de la durée de vie de l'ustensile de cuisson. Cette disposition permet aussi de rendre moins visibles les défauts mécaniques générés par l'opération d'emboutissage de la calotte dans la zone de la paroi circonférentielle incurvée convexe. La texturation de la surface libre de la calotte emboutie permet de faciliter les opérations de polissage.

Avantageusement alors, la paroi circonférentielle incurvée convexe est prolongée et entourée par une paroi latérale circonférentielle, et la surface libre texturée s'étend sur la paroi latérale circonférentielle. La surface libre texturée ne recouvre toutefois pas nécessairement l'ensemble de la paroi latérale circonférentielle. Cette disposition permet de masquer les défauts mécaniques apparaissant au cours de la durée de vie de l'ustensile de cuisson. Cette disposition permet aussi de rendre moins visibles les défauts mécaniques générés par l'opération d'emboutissage de la calotte dans la zone de la paroi latérale circonférentielle, notamment pour les ustensiles de cuisson comportant une paroi latérale circonférentielle présentant une hauteur importante par rapport à leur diamère, tels que les casseroles, les sauteuses ou les cuves d'appareil de cuisson.

Avantageusement, la face extérieure de la calotte présente des profondeurs de gravure comprises entre 20 et 100 µm.

Selon une forme de réalisation adaptée à la réalisation d'ustensiles de cuisson prévus pour reposer sur une plaque de chauffe, une plaque de diffusion thermique en aluminium recouvre partiellement la face extérieure de la calotte. Cette disposition permet une meilleure répartition de la chaleur.

Avantageusement alors, une plaque de fond en acier inoxydable recouvre la plaque de diffusion thermique.

Avantageusement alors, pour obtenir un ustensile de cuisson compatible avec un chauffage par induction, la plaque de fond est en acier inoxydable ferritique.

Avantageusement encore, la face intérieure de la calotte présente un revêtement intérieur. Si la face intérieure de la calotte n'est pas revêtue, une finition par émerisage est de préférence réalisée.

Avantageusement encore, les parties en creux sont revêtues et/ou colorées.

Selon différentes formes de réalisation, les parties en creux peuvent notamment présenter l'une des surfaces suivantes : revêtement PTFE, revêtement céramique, laque, couche d'oxyde superficielle procurant une coloration interférentielle.

Avantageusement encore, la calotte présente une géométrie circulaire.

Selon une forme de réalisation, l'ustensile de cuisson comporte au moins une poignée montée sur la calotte.

L'ustensile selon l'une au moins des caractéristiques précitées peut être obtenu par le procédé précité.

L'invention sera mieux comprise à l'étude de plusieurs exemples de réalisation, pris à titre non limitatif, illustrés dans les figures annexées, dans lesquelles :
- Les figures 1 à 5 sont cinq exemples de réalisation de tôles d'acier inoxydable utilisées dans le procédé et l'ustensile de cuisson selon l'invention,
- La figure 6 est une vue en coupe schématique d'un exemple de réalisation d'un ustensile de cuisson selon l'invention, comportant une calotte en acier inoxydable texturé avec un fond diffuseur rapporté,
- La figure 7 est une vue partielle d'une variante de réalisation de l'ustensile de cuisson illustré sur la figure 6, comportant une poignée,
- La figure 8 est une vue en coupe schématique d'un autre exemple de réalisation d'un ustensile de cuisson selon l'invention, comportant une calotte en acier inoxydable texturé et une poignée,
- La figure 9 est une vue en perspective d'une variante de réalisation d'un ustensile de cuisson selon l'invention, comportant une calotte en acier inoxydable texturé coloré, la figure 9a étant une vue agrandie d'une partie de la figure 9,
- La figure 10 est une vue en perspective d'une autre variante de réalisation d'un ustensile de cuisson selon l'invention, comportant une calotte en acier inoxydable texturé revêtu de PTFE post-poli, la figure 10a étant une vue agrandie d'une partie de la figure 10.

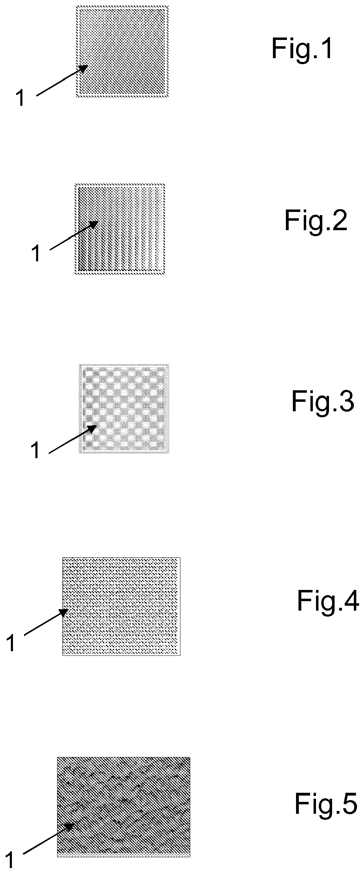

Les figures 1 à 5 illustrent différents exemples de réalisation de tôle d'acier inoxydable texturée. La surface extérieure de ces tôles n'est pas simplement lisse ou polie, mais présente un motif en relief, à savoir une texture. Ce motif peut être répétitif. Le motif en relief présente alors une trame régulière périodique. Le motif en relief peut présenter des axes de symétrie clairement visibles, notamment sous les formes suivantes : gaufré (figure 1) ; en bandes (figure 2) ; en damier (figure 3) ; tissé, ou toile (figure 4). Toutefois le motif en relief n'est pas nécessairement répétitif. Le motif en relief peut apparaître davantage irrégulier, tel que représenté notamment sur la figure 5.

La matière première utilisée est une tôle d'acier inoxydable ayant subi une opération supplémentaire de gravure lors du laminage.

L'acier inoxydable peut être un acier inoxydable austénitique (par exemple un acier inoxydable de type 304) ou un acier inoxydable ferritique (par exemple un acier inoxydable de type 430, 441, ou 436).

Les tôles sont gravées mécaniquement par impression à partir d'un cylindre de laminoir ayant un motif en relief.

Deux types de finitions de gravure existent : gravure sur une seule face (l'autre face restant lisse) ou sur les deux faces. Dans le cas d'une application de type ustensile de cuisson, une gravure sur une seule face est préférentiellement utilisée. La face gravée est préférentiellement une face convexe formant une partie extérieure de l'ustensile de cuisson.

Dans le cas d'une gravure sur une seule face, les motifs gravés se retrouvent toutefois en surimpression sur la face lisse. Pour éviter que la face intérieure de l'ustensile culinaire présente un aspect rugueux de type « peau d'orange », l'utilisation de textures de gravure présentant un motif périodique est préférée.

Par ailleurs, plus la profondeur du motif gravé sera importante, plus la surimpression sur la face lisse sera marquée. Préférentiellement, des profondeurs de gravure comprises entre 20 et 100 µm sont utilisées.

La gravure est réalisée lors du laminage à l'aide de cylindres spéciaux. L'opération de gravure au laminage préserve les propriétés de la couche passive de l'acier inoxydable. La gravure est suivie d'une opération de recuit brillant. Cette opération permet de restaurer la ductilité de la matière pour une bonne emboutissabilité, de préserver sa brillance et de conférer une couche passive optimale pour résister à la corrosion.

Ces opérations permettent d'obtenir un fini de surface homogène et reproductible pour différentes nuances et dimensions.

Dans le cas d'une nuance ferritique, la texture permet de masquer en partie le phénomène de cordage intervenant sur la paroi latérale de l'ustensile culinaire embouti. L'opération de polissage est donc facilitée.

L'ensemble des opérations d'obtention d'un ustensile de cuisson en acier inoxydable sont ensuite effectuées : découpe d'un flanc dans la tôle d'acier inoxydable, emboutissage du flanc pour former une calotte 2, avantageusement frappe d'un fond diffuseur 10, éventuellement revêtement intérieur et/ou extérieur puis polissage de la surface libre de la face extérieure de la calotte 2.

Si la plus grande dimension du flanc est inférieure à la circonférence du cylindre de laminage gravé présentant un motif non périodique, ou inférieure à la période du motif du cylindre de laminage gravé, dans le cas d'un motif périodique, la texture de la face texturée de la calotte apparaîtra apériodique.

Le fond diffuseur 10 comprend usuellement une plaque de diffusion thermique 11 en aluminium intercalée entre une plaque de fond 12 en acier inoxydable et la calotte 2 emboutie de l'ustensile de cuisson, réalisée en acier inoxydable gravé. La plaque de fond 12 peut notamment être réalisée en acier inoxydable ferritique, pour obtenir un ustensile de cuisson compatible avec un chauffage par induction. Si désiré la plaque de fond 12 peut former une coupelle.

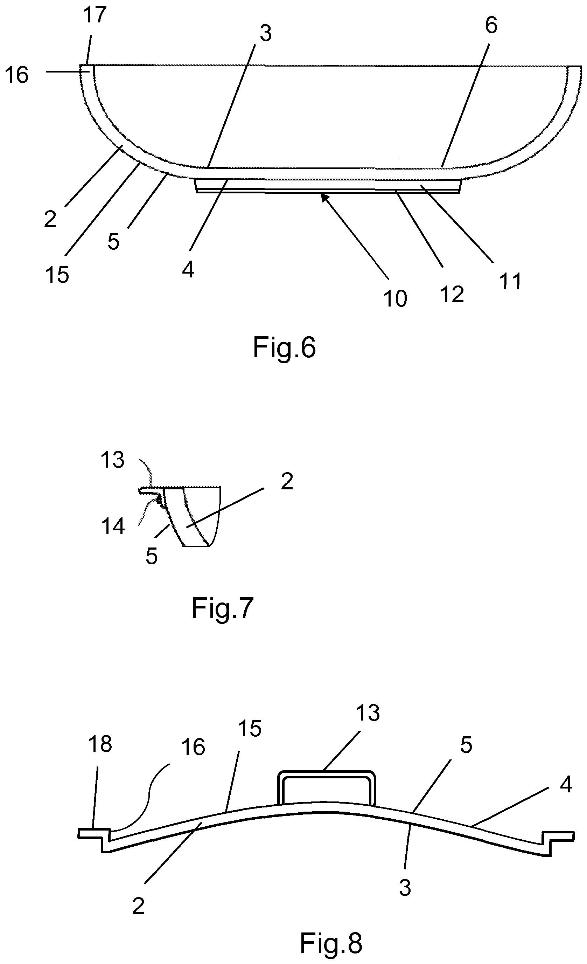

L'ustensile de cuisson illustré sur la figure 6 comporte une calotte 2 en acier inoxydable présentant une face intérieure 3 et une face extérieure 4. La calotte 2 présente une géométrie circulaire. La face extérieure 4 de la calotte 2 présente une surface libre 5 texturée. La plaque de diffusion thermique 11 en aluminium recouvre partiellement la face extérieure 4 de la calotte 2, laissant apparente la surface libre 5.

Tel que bien visible sur la figure 6, la face extérieure 4 présente une paroi circonférentielle incurvée convexe 15. Ainsi la surface libre 5 texturée s'étend sur la paroi circonférentielle incurvée convexe 15. Dans l'exemple de réalisation illustré sur la figure 6, la paroi circonférentielle incurvée convexe 15 est prolongée et entourée par une paroi latérale circonférentielle 16. La paroi latérale circonférentielle 16 s'étend jusqu'à un bord supérieur 17 de la calotte 2. La hauteur de la paroi latérale circonférentielle 16 est inférieure à la hauteur de la paroi circonférentielle incurvée convexe 15. La surface libre 5 texturée s'étend sur la paroi latérale circonférentielle 16. La paroi circonférentielle incurvée convexe 15 entoure le fond diffuseur 10. La portion de la face extérieure 4 recouverte par le fond diffuseur 10 peut être texturée si désiré.

Différentes formes d'ustensiles de cuisson peuvent être obtenues, notamment une poêle, tel que par exemple représenté sur la figure 6, ou encore une casserole, une sauteuse, un wok, une cuve d'appareil électrique de cuisson, mais aussi un couvercle, tel que par exemple représenté sur la figure 8. Tel que représenté sur les figures 7 et 8, l'ustensile de cuisson peut comporter au moins une poignée 13 montée sur la calotte 2. La poignée 13 peut notamment être fixée sur un goujon 14 soudé à la calotte 2.

Tel que bien visible sur la figure 8, la face extérieure 4 présente une paroi circonférentielle incurvée convexe 15. Ainsi la surface libre 5 texturée s'étend sur la paroi circonférentielle incurvée convexe 15. Dans l'exemple de réalisation illustré sur la figure 6, la paroi circonférentielle incurvée convexe 15 est prolongée et entourée par une paroi latérale circonférentielle 16. La hauteur de la paroi latérale circonférentielle 16 est inférieure à la hauteur de la paroi circonférentielle incurvée convexe 15. La surface libre 5 texturée s'étend sur la paroi latérale circonférentielle 16. La paroi circonférentielle incurvée convexe 15 porte la poignée 13. La paroi latérale circonférentielle 16 est agencée entre la paroi circonférentielle incurvée convexe 15 et une collerette périphérique 18 prévue pour reposer sur un bord supérieur d'un ustensile de cuisson. La face supérieure de la collerette périphérique 18 peut être texturée si désiré. La portion de face extérieure 4 recouverte par le fond diffuseur 10 peut être texturée si désiré.

Les épaisseurs de tôles d'acier inoxydable utilisées sont usuellement comprises entre 0,5 et 0,8 mm. Une épaisseur typique est 0,6 mm.

L'intérieur de l'ustensile de cuisson en acier inoxydable peut présenter une surface de cuisson ou une surface exposée à la cuisson, soit sans revêtement, soit revêtue, par exemple avec un revêtement PTFE, ou encore avec un revêtement céramique élaboré par voie sol-gel. La face intérieure 3 de la calotte 2 présente alors un revêtement intérieur 6.

Le procédé de fabrication d'un ustensile de cuisson selon l'invention peut comporter les étapes suivantes :
- Découpe de la tôle d'acier inoxydable gravé, usuellement en forme de disque, pour former un flanc, ou sélection d'un flanc déjà découpé,
- Emboutissage du flanc, généralement réalisé sans film protecteur de la texture, pour former la calotte 2. Lorsqu'un film protecteur de la texture est utilisé, ce film protecteur est supprimé après cette opération d'emboutissage. La texturation permet de masquer certains défauts apparaissant lors de l'emboutissage, tels que notamment le cordage, observé dans la paroi latérale pour les tôles embouties en acier inoxydable ferritique, ou la peau d'orange, observée dans l'arrondi reliant le fond à la paroi latérale de la tôle emboutie.
- Optionnellement, frappe à chaud du fond diffuseur 10. L'opération de frappe est réalisée sur la calotte 2 sans traitement de surface mécanique préalable. Elle entraîne un jaunissement de la calotte 2 sur le bas de la paroi latérale. Le fond diffuseur 10 garantit une homogénéité de température de la surface de cuisson lors de la montée en température de l'ustensile de cuisson.
- Optionnellement, réalisation d'un revêtement intérieur 6 sur la face intérieure 3 de la calotte 2 formant la surface de cuisson. Une phase d'enduction d'un revêtement intérieur 6 de type PTFE ou céramique peut notamment être prévue. Une préparation de surface destinée à favoriser l'accrochage du revêtement intérieur 6, par exemple un sablage, peut être prévue avant la phase d'enduction. La cuisson de ces revêtements (typiquement 430°C pendant 20 min pour le revêtement PTFE, 250°C pendant 15 min pour le revêtement céramique réalisé par voie sol-gel) entraîne un jaunissement de la surface libre 5 de la face extérieure 4 de la calotte 2.
- Polissage de la surface libre 5 de la face extérieure 4 de la calotte 2. Ce polissage est nécessaire pour supprimer le jaunissement dû à la croissance de la couche d'oxyde apparue localement lors de la frappe du fond diffuseur 10, et sur l'ensemble de la surface de la calotte 2 lors de la cuisson du revêtement intérieur 6. Un choix de paramètres adapté permet de réaliser un polissage permettant de supprimer le jaunissement sans dégrader le motif en relief de la surface libre 5 de la face extérieure 4 de la calotte 2. L'utilisation d'acier inoxydable texturé permet de réduire les gammes de polissage réalisées. En effet, les principaux défauts apparaissant lors de l'emboutissage étant masqués par la texture, une phase de pré-polissage visant à diminuer la rugosité de la surface libre 5 de la face extérieure 4 de la calotte 2 par l'action de particules abrasives se révèle inutile avant d'envisager une phase d'avivage. La phase d'avivage est un polissage en vue de réaliser des surfaces très brillantes, généralement à l'aide de disques en cuir, feutre ou tissus, recouverts de produits de polissage. La phase d'avivage est donc suffisante pour la finition des ustensiles de cuisson présentant une surface extérieure texturée.

Les ustensiles de cuisson ainsi obtenus présentent une finition extérieure originale moins sensible à la rayure. De plus les opérations d'obtention effectuées à partir de la tôle d'acier inoxydable peuvent être simplifiées, voire accélérées, du fait d'opérations de polissage plus limitées.

Les étapes essentielles du procédé d'obtention d'un ustensile de cuisson selon l'invention sont les suivantes :
- Réalisation ou fourniture d'un flanc à partir d'une tôle d'acier inoxydable texturée présentant au moins une face texturée 1,
- Emboutissage du flanc pour former une calotte 2 comportant une face intérieure 3 et une face extérieure 4, la face extérieure 4 présentant des parties en relief correspondant à la face texturée 1 du flanc,
- Optionnellement, recouvrement partiel de la face extérieure de la calotte 2, de sorte que la face extérieure 4 de la calotte 2 présente une surface libre 5,
- Traitement mécanique de finition de la surface libre de la face extérieure 4 de la calotte 2, pour laisser apparaître l'acier inoxydable sur les parties en relief de la surface libre de la face extérieure 4 de la calotte 2.

Le traitement mécanique de finition utilisé avec un flanc d'acier inoxydable texturé comporte un polissage de finition de type avivage, sans phase de pré-polissage utilisant des particules abrasives.

A titre de variante, il est possible d'envisager la possibilité d'utiliser comme matière première une tôle en acier inoxydable texturé coloré. Les aciers inoxydables austénitiques peuvent en effet être colorés grâce au procédé INCO :
- Immersion dans un bain CrO₃ + H₂SO₄ : Durant cette phase, une couche d'oxyde croît sur la surface de l'acier inoxydable et procure une coloration interférentielle à la surface de l'acier inoxydable. La couleur obtenue dépend directement de l'épaisseur de la couche d'oxyde, donc du temps de traitement.
- Durcissement cathodique afin de rendre la couche résistante mécaniquement.

Une des difficultés reste la fragilité du film coloré. La combinaison de la texturation et de la coloration permet de pallier cet inconvénient. En effet, en polissant légèrement l'extrémité des motifs, la partie colorée de l'acier inoxydable reste dans les parties en creux et est donc moins susceptible d'être endommagée.

Le procédé consiste alors à utiliser une tôle d'acier inoxydable texturée comportant une couche d'oxyde superficielle sur la face texturée 1 procurant une coloration interférentielle, et à réaliser le traitement mécanique de finition pour retirer la couche d'oxyde superficielle sur les parties en relief de la surface libre 5 de la face extérieure 4 de la calotte 2, de manière à laisser apparaitre l'acier inoxydable. Un polissage de finition de type avivage est suffisant pour réaliser une telle opération.

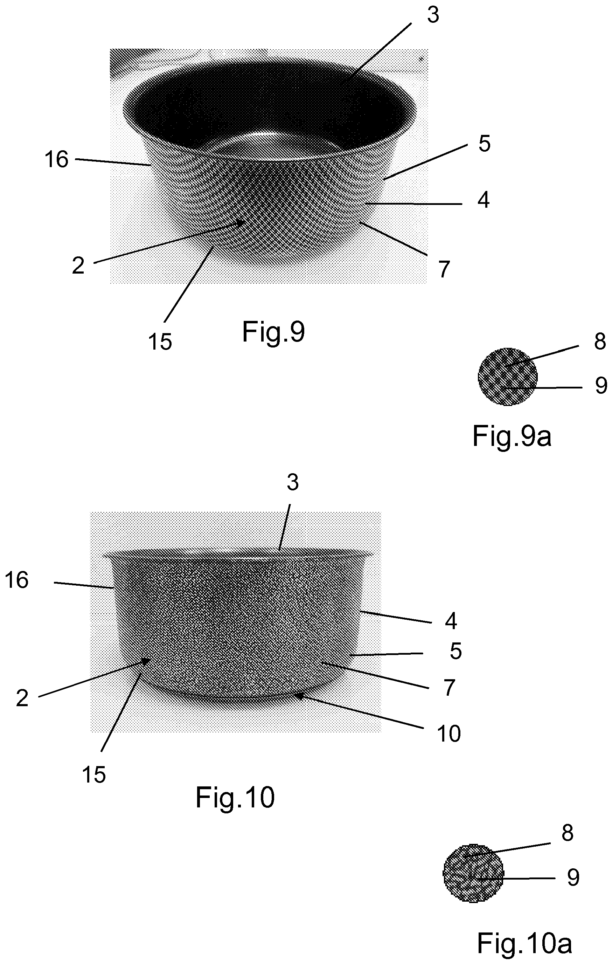

L'ustensile de cuisson illustré sur la figure 9 est une cuve obtenue à partir de la tôle d'acier inoxydable texturée illustrée sur la figure 3, présentant un motif régulier en damier. Ce motif est légèrement déformé par l'opération d'emboutissage, tel que mieux visible sur la figure 9a. La surface libre 5 de la face extérieure 4 de la calotte 2 comporte des parties proéminentes 8 polies en acier inoxydable et des parties en creux 9 colorées. Les parties en creux 9 colorées présentent une couche d'oxyde superficielle procurant une coloration interférentielle. La face extérieure 4 présente ainsi un revêtement extérieur 7 partiel. La plus petite dimension surfacique, ou largeur, des parties proéminentes 8 et des parties en creux 9 est de préférence comprise entre 0,5 mm et 3 mm, et présente une valeur moyenne de l'ordre de 2 mm dans la réalisation illustrée sur les figures 9 et 9a. La face intérieure 3 est de préférence dépourvue de revêtement intérieur, la cuisson d'un revêtement modifiant l'épaisseur de la couche d'oxyde superficielle, ce qui contribue à dégrader la coloration. Tel que bien visible sur la figure 9, la face extérieure 4 présente une paroi circonférentielle incurvée convexe 15 prolongée et entourée par une paroi latérale circonférentielle 16. La surface libre 5 texturée s'étend sur la paroi circonférentielle incurvée convexe 15 et sur la paroi latérale circonférentielle 16. La hauteur de la paroi latérale circonférentielle 16 est supérieure à la hauteur de la paroi circonférentielle incurvée convexe 15. Si désiré, la calotte 2 peut recevoir un fond diffuseur (non visible sur la figure 9).

A titre de variante également, après la réalisation d'une calotte 2 en acier inoxydable texturé, la face extérieure 4 de la calotte 2 peut être enduite avec un revêtement extérieur 7 tel que par exemple un revêtement PTFE ou un revêtement céramique, ou encore une laque. Un revêtement extérieur 7 de type PTFE permet d'améliorer la facilité de nettoyage de la surface libre 5 de la face extérieure 4 de la calotte 2. Le revêtement extérieur 7 peut être noir ou coloré. Après cuisson ou séchage du revêtement extérieur 7, une opération de post-polissage permet de révéler les arêtes de l'acier inoxydable, permettant de réaliser des effets de décoration sur la surface libre 5 de la face extérieure 4 d'un ustensile de cuisson en acier inoxydable. De telles faces extérieures 4 présentent une meilleure résistance à la rayure que des faces extérieures lisses revêtues ou non.

Le procédé consiste alors à réaliser le revêtement extérieur 7 sur la surface libre 5 de la face extérieure 4 de la calotte 2, le cas échéant après l'assemblage par frappe à chaud de la calotte 2 avec le fond diffuseur 10, et à réaliser un traitement mécanique de finition comportant un brossage pour retirer le revêtement extérieur 7 sur les parties en relief de la surface libre 5 de la face extérieure 4 de la calotte 2, de manière à laisser apparaitre l'acier inoxydable.

L'ustensile de cuisson illustré sur la figure 10 est une cuve comportant un fond diffuseur 10, obtenue à partir de la tôle d'acier inoxydable texturée illustrée sur la figure 5, présentant un motif irrégulier, ou apériodique. Ce motif mieux visible sur la figure 10a est également légèrement déformé par l'opération d'emboutissage. La surface libre 5 de la face extérieure 4 de la calotte 2 comporte aussi des parties proéminentes 8 polies en acier inoxydable et des parties en creux 9 revêtues. Les parties en creux 9 revêtues peuvent alors présenter notamment un revêtement PTFE, un revêtement céramique, ou encore une laque. La face extérieure 4 présente ainsi un revêtement extérieur 7 partiel. Si désiré le revêtement extérieur 7 peut être coloré. La plus petite dimension surfacique, ou largeur, des parties proéminentes 8 et des parties en creux 9 est de préférence comprise entre 0,5 mm et 3 mm, et présente une valeur moyenne de l'ordre de 0,8 mm dans la réalisation illustrée sur les figures 10 et 10a. La plus grande dimension surfacique, ou longueur, pas nécessairement rectiligne, des parties proéminentes 8 et des parties en creux 9 peut être supérieure à 3 mm. La face intérieure 3 peut comporter ou non un revêtement intérieur. Tel que bien visible sur la figure 9, la face extérieure 4 présente une paroi circonférentielle incurvée convexe 15 prolongée et entourée par une paroi latérale circonférentielle 16. La surface libre 5 texturée s'étend sur la paroi circonférentielle incurvée convexe 15 et sur la paroi latérale circonférentielle 16. La hauteur de la paroi latérale circonférentielle 16 est supérieure à la hauteur de la paroi circonférentielle incurvée convexe 15.

De manière usuelle, le procédé consiste à utiliser un flanc circulaire formant un disque. Toutefois le flanc ne présente pas nécessairement une géométrie circulaire. Une géométrie elliptique peut notamment être envisagée pour réaliser une poêle à poisson, ou un couvercle correspondant à un tel ustensile de cuisson.

De manière préférée, pour réaliser des ustensiles de cuisson de type article culinaire présentant une bonne répartition de chaleur, le procédé consiste à réaliser un assemblage par frappe à chaud de la calotte 2 avec une plaque de diffusion thermique 11 en aluminium recouvrant partiellement la face extérieure 4 de la calotte 2, et à effectuer le traitement mécanique de finition sur la surface libre 5 de la face extérieure 4 de la calotte 2 après l'assemblage par frappe à chaud de la calotte 2 avec le fond diffuseur 10 comprenant la plaque de diffusion thermique 11.

Si désiré, un assemblage par frappe à chaud de la calotte 2 avec une plaque de diffusion thermique 11 en aluminium recouvrant partiellement la face extérieure 4 de la calotte 2 et avec une plaque de fond 12 en acier inoxydable recouvrant la plaque de diffusion thermique 11 peut être réalisé, le traitement mécanique de finition sur la surface libre 5 de la face extérieure 4 de la calotte 2 étant effectué après l'assemblage par frappe à chaud de la calotte 2 avec le fond diffuseur 10 comprenant la plaque de diffusion thermique 11 et la plaque de fond 12.

De manière avantageuse, pour améliorer les propriétés de la face intérieure 3 de la calotte 2, le procédé peut consister à réaliser un revêtement intérieur 6 sur la face intérieure 3 de la calotte 2 avant le traitement mécanique de finition. De manière préférée alors, le procédé consiste à réaliser le revêtement intérieur 6 sur la face intérieure 3 de la calotte 2 après l'assemblage par frappe à chaud de la calotte 2 avec le fond diffuseur 10 comprenant la plaque de diffusion thermique 11 et si désiré la plaque de fond 12.

Si la face intérieure 3 de la calotte 2 n'est pas revêtue, une finition par émerisage est de préférence réalisée.

La texturation de la face extérieure 4 permet de cacher les défauts pouvant apparaître soit lors de la réalisation de l'ustensile de cuisson (défauts d'emboutissage), soit au cours de l'utilisation de l'ustensile de cuisson (rayures).

A titre de variante, les parties en creux 9 ne sont pas nécessairement colorées et/ou revêtues.

La présente invention n'est nullement limitée aux exemples de réalisation décrits et à leurs variantes, mais englobe de nombreuses modifications dans le cadre des revendications.

## Revendications

1. Procédé d'obtention d'un ustensile de cuisson, comprenant les étapes suivantes :
- Réalisation ou fourniture d'un flanc à partir d'une tôle d'acier inoxydable texturée présentant au moins une face texturée (1),
- Emboutissage du flanc pour former une calotte (2) comportant une face intérieure (3) et une face extérieure (4), la face extérieure (4) présentant une paroi circonférentielle incurvée convexe (15), la face extérieure (4) présentant des parties en relief correspondant à la face texturée (1) du flanc,
- Optionnellement, recouvrement partiel de la face extérieure (4) de la calotte (2),
- Traitement mécanique de finition de la surface libre de la face extérieure (4) de la calotte (2), pour laisser apparaître l'acier inoxydable sur les parties en relief de la surface libre de la face extérieure (4) de la calotte (2),
**caractérisé en ce que** la face extérieure (4) de la calotte (2) présente une surface libre (5) texturée, la surface libre (5) texturée s'étendant sur la paroi circonférentielle incurvée convexe (15).

2. Procédé d'obtention d'un ustensile de cuisson selon la revendication 1, **caractérisé en ce que** le traitement mécanique de finition comporte un polissage de finition de type avivage, sans phase de pré-polissage utilisant des particules abrasives.

3. Procédé d'obtention d'un ustensile de cuisson selon la revendication 2, **caractérisé en ce qu'**il consiste à utiliser une tôle d'acier inoxydable texturée comportant sur la face texturée (1) une couche d'oxyde superficielle procurant une coloration interférentielle, et à réaliser le traitement mécanique de finition pour retirer la couche d'oxyde superficielle sur les parties en relief de la surface libre de la face extérieure (4) de la calotte (2), de manière à laisser apparaître l'acier inoxydable.

4. Procédé d'obtention d'un ustensile de cuisson selon la revendication 1, **caractérisé en ce qu'**il consiste à réaliser un revêtement extérieur (7) sur la surface libre de la face extérieure (4) de la calotte (2), et **en ce que** le traitement mécanique de finition comporte un brossage pour retirer le revêtement extérieur (7) sur les parties en relief de la surface libre de la face extérieure (4) de la calotte (2).

5. Procédé d'obtention d'un ustensile de cuisson selon l'une des revendications 1 à 4, **caractérisé en ce qu'**il consiste à réaliser un assemblage par frappe à chaud de la calotte (2) avec une plaque de diffusion thermique (11) en aluminium recouvrant partiellement la face extérieure (4) de la calotte (2), et à effectuer le traitement mécanique de finition après l'assemblage par frappe à chaud.

6. Procédé d'obtention d'un ustensile de cuisson selon l'une des revendications 1 à 5, **caractérisé en ce qu'**il consiste à réaliser un assemblage par frappe à chaud de la calotte (2) avec une plaque de diffusion thermique (11) en aluminium recouvrant partiellement la face extérieure (4) de la calotte (2) et avec une plaque de fond (12) en acier inoxydable recouvrant la plaque de diffusion thermique (11), et à effectuer le traitement mécanique de finition après l'assemblage par frappe à chaud.

7. Procédé d'obtention d'un ustensile de cuisson selon l'une des revendications 1 à 6, **caractérisé en ce qu'**il consiste à réaliser un revêtement intérieur (6) sur la face intérieure (3) de la calotte (2) avant le traitement mécanique de finition.

8. Procédé d'obtention d'un ustensile de cuisson selon l'une des revendications 5 ou 6 et la revendication 7, **caractérisé en ce qu'**il consiste à réaliser le revêtement intérieur (6) sur la face intérieure (3) de la calotte (2) après l'assemblage par frappe à chaud.

9. Procédé d'obtention d'un ustensile de cuisson selon l'une des revendications 1 à 8, **caractérisé en ce qu'**il consiste à utiliser un flanc circulaire formant un disque.

10. Ustensile de cuisson, comportant une calotte (2) emboutie en acier inoxydable présentant une face intérieure (3) et une face extérieure (4), la face extérieure (4) de la calotte (2) présentant une surface libre (5) texturée, la face extérieure (4) présentant une paroi circonférentielle incurvée convexe (15), dont la surface libre (5) texturée comporte des parties proéminentes (8) polies en acier inoxydable et des parties en creux (9), **caractérisé en ce que** la surface libre (5) texturée s'étend sur la paroi circonférentielle incurvée convexe (15).

11. Ustensile de cuisson selon la revendication 10, **caractérisé en ce que** la paroi circonférentielle incurvée convexe (15) est prolongée et entourée par une paroi latérale circonférentielle (16) et **en ce que** la surface libre (5) texturée s'étend sur la paroi latérale circonférentielle (16).

12. Ustensile de cuisson selon l'une des revendications 10 ou 11, **caractérisé en ce que** la face extérieure (4) de la calotte (2) présente des profondeurs de gravure comprises entre 20 et 100 µm.

13. Ustensile de cuisson selon la revendication 12, **caractérisé en ce qu'**une plaque de diffusion thermique (11) en aluminium recouvre partiellement la face extérieure (4) de la calotte (2).

14. Ustensile de cuisson selon la revendication 13, **caractérisé en ce qu'**une plaque de fond (12) en acier inoxydable recouvre la plaque de diffusion thermique (11).

15. Ustensile de cuisson selon la revendication 14, **caractérisé en ce que** la plaque de fond (12) est en acier inoxydable ferritique.

16. Ustensile de cuisson selon l'une des revendications 10 à 15, **caractérisé en ce que** la face intérieure (3) de la calotte (2) présente un revêtement intérieur (6).

17. Ustensile de cuisson selon l'une des revendications 10 à 16, **caractérisé en ce que** les parties en creux (9) sont revêtues et/ou colorées.

18. Ustensile de cuisson selon la revendication 17, **caractérisé en ce que** les parties en creux (9) présentent l'une des surfaces suivantes : revêtement PTFE, revêtement céramique, laque, couche d'oxyde superficielle procurant une coloration interférentielle.

19. Ustensile de cuisson selon l'une des revendications 10 à 18, **caractérisé en ce que** la calotte (2) présente une géométrie circulaire.

20. Ustensile de cuisson selon l'une des revendications 10 à 19, **caractérisé en ce qu'**il comporte au moins une poignée (13) montée sur la calotte (2).

## Patentansprüche

1. Verfahren zum Erhalt eines Kochgeräts, umfassend die folgenden Schritte:
- Realisierung oder der Bereitstellung einer Seitenwand ausgehend von einem texturierten Blech aus rostfreiem Stahl, das mindestens eine texturierte Fläche (1) aufweist,
- Ausstanzen der Seitenwand, um eine Haube (2) zu bilden, die eine Innenfläche (3) und eine Außenfläche (4) aufweist, wobei die Außenfläche (4) eine umlaufende, konvex gebogene Wand (15) aufweist, wobei die Außenfläche (4) erhabene Teile aufweist, die der texturierten Oberfläche (1) der Seitenwand entsprechen,
- gegebenenfalls teilweise Bedeckung der freien Außenfläche (4) der Haube (2),
- mechanische Endbehandlung der freien Oberfläche der äußeren Seite (4) der Haube (2), um den rostfreien Stahl auf den erhabenen Teilen der freien Oberfläche der Außenfläche (4) der Haube(2) erscheinen zu lassen,
**dadurch gekennzeichnet, dass** die Außenfläche (4) der Haube (2) eine freie, texturierte Oberfläche (5) aufweist, wobei die freie texturierte Oberfläche (5) sich auf der umlaufenden, konvex gebogenen Wand (15) erstreckt.

2. Verfahren zum Erhalt eines Kochgeräts nach Anspruch 1, **dadurch gekennzeichnet, dass** die mechanische Endbehandlung eine Endpolitur vom Typ der Verstärkung ohne eine Vorpoliturphase, die Scheuerpartikel verwendet, aufweist.

3. Verfahren zum Erhalt eines Kochgeräts nach Anspruch 2, **dadurch gekennzeichnet, dass** es darin besteht, ein texturiertes Blech aus rostfreiem Stahl zu verwenden, das auf der texturierten Fläche (1) eine Oberflächenoxidschicht aufweist, die eine Interferenzfärbung bereitstellt, und die mechanische Endbehandlung zu realisieren, um die Oberflächenoxidschicht auf den erhabenen Teilen der freien Oberfläche der Außenfläche (4) der Haube (2) zu entfernen, um den rostfreien Stahl hervortreten zu lassen.

4. Verfahren zum Erhalt eines Kochgeräts nach Anspruch 1, **dadurch gekennzeichnet, dass** es darin besteht, eine äußere Beschichtung (7) auf der freien Oberfläche der Außenfläche (4) der Haube (2) zu realisieren, und dass die mechanische Endbehandlung ein Bürsten umfasst, um die äußere Beschichtung (7) auf den erhabenen Teilen der freien Oberfläche der Außenfläche (4) der Haube (2) zu entfernen.

5. Verfahren zum Erhalt eines Kochgeräts nach einem der Ansprüche 1 bis 4, **dadurch gekennzeichnet, dass** es darin besteht, eine Montage durch Warmumformung der Haube (2) mit einer thermischen Diffusionsplatte (11) aus Aluminium zu realisieren, die teilweise die Außenfläche (4) der Haube (2) bedeckt, und dass die mechanische Endbehandlung nach der Montage durch Warmumformung bewirkt wird.

6. Verfahren zum Erhalt eines Kochgeräts nach einem der Ansprüche 1 bis 5, **dadurch gekennzeichnet, dass** es darin besteht, eine Montage durch Warmumformung der Haube (2) mit einer thermischen Diffusionsplatte (11) aus Aluminium, die teilweise die Außenfläche (4) der Haube (2) bedeckt, und mit einer Bodenplatte (12) aus rostfreiem Stahl zu realisieren, die die thermische Diffusionsplatte (11) bedeckt, und die mechanische Endbehandlung nach der Montage durch Warmumformung zu bewirken.

7. Verfahren zum Erhalt eines Kochgeräts nach einem der Ansprüche 1 bis 6, **dadurch gekennzeichnet, dass** es darin besteht, eine Innenauskleidung (6) auf der Innenfläche (3) der Haube (2) vor der mechanischen Endbehandlung herzustellen.

8. Verfahren zum Erhalt eines Kochgeräts nach einem der Ansprüche 5 oder 6 und dem Anspruch 7, **dadurch gekennzeichnet, dass** es darin besteht, eine Innenauskleidung (6) auf der Innenfläche (3) der Haube (2) nach der Montage durch Warmumformung herzustellen.

9. Verfahren zum Erhalt eines Kochgeräts nach einem der Ansprüche 1 bis 8, **dadurch gekennzeichnet, dass** es darin besteht, eine kreisförmige Seitenwand zu verwenden, die eine Scheibe bildet.

10. Kochgerät, aufweisend eine Haube (2), die aus rostfreiem Stahl ausgestanzt ist und eine Innenfläche (3) und eine Außenfläche (4) aufweist, wobei die Außenfläche (4) der Haube (2) eine freie texturierte Oberfläche (5) aufweist, wobei die Außenfläche (4) eine umlaufende, konvex gekrümmte Wand (15) aufweist, deren freie texturierte Oberfläche (5) hervorstehende Teile (8) aus poliertem rostfreiem Stahl und ausgesparte Teile (9) aufweist, **dadurch gekennzeichnet, dass** die freie texturierte Oberfläche (5) sich auf der umlaufenden, konvex gekrümmten Wand (15) erstreckt.

11. Kochgerät nach Anspruch 10, **dadurch gekennzeichnet, dass** die umlaufende, konvex gekrümmte Wand (15) verlängert ist und von einer umlaufenden Seitenwand (16) umgeben ist, und dass die freie texturierte Oberfläche (5) sich über die umlaufende Seitenwand (16) erstreckt.

12. Kochgerät nach einem der Ansprüche 10 oder 11, **dadurch gekennzeichnet, dass** die Außenfläche (4) der Haube (2) Ätztiefen aufweist, die zwischen 20 und 100 µm liegen.

13. Kochgerät nach Anspruch 12, **dadurch gekennzeichnet, dass** eine thermische Diffusionsplatte (11) aus Aluminium teilweise die Außenfläche (4) der Haube (2) bedeckt.

14. Kochgerät nach Anspruch 13, **dadurch gekennzeichnet, dass** eine Bodenplatte (12) aus rostfreiem Stahl die thermische Diffusionsplatte (11) bedeckt.

15. Kochgerät nach Anspruch 14, **dadurch gekennzeichnet, dass** die Bodenplatte (12) aus ferritischem rostfreiem Stahl ist.

16. Kochgerät nach einem der Ansprüche 10 bis 15, **dadurch gekennzeichnet, dass** die Innenfläche (3) der Haube (2) eine Innenbeschichtung (6) aufweist.

17. Kochgerät nach einem der Ansprüche 10 bis 16, **dadurch gekennzeichnet, dass** die ausgesparten Teile (9) beschichtet und / oder gefärbt sind.

18. Kochgerät nach Anspruch 17, **dadurch gekennzeichnet, dass** die ausgesparten Teile (9) eine der folgenden Oberflächen aufweisen: PTFE-Beschichtung, Keramikbeschichtung, Lack, Oberflächenoxidschicht, die eine Interferenzfärbung bereitstellt.

19. Kochgerät nach einem der Ansprüche 10 bis 18, **dadurch gekennzeichnet, dass** die Haube (2) eine kreisförmige Geometrie aufweist.

20. Kochgerät nach einem der Ansprüche 10 bis 19, **dadurch gekennzeichnet, dass** es mindestens einen Handgriff (13) aufweist, der auf der Haube (2) angebracht ist.

## Claims

1. Method for obtaining a cooking utensil, comprising the following steps:
- producing or providing a blank from a sheet of textured stainless steel having at least one textured face (1),
- pressing the blank in order to form a calotte (2) comprising an internal face (3) and an external face (4), the external face (4) having a convex curved circumferential wall (15), the external face (4) having parts in relief corresponding to the textured face (1) of the blank,
- optionally, partially covering the external face (4) of the calotte (2),
- mechanical finishing treatment of the free surface of the external face (4) of the calotte (2), in order to leave the stainless steel showing on the parts in relief of the free surface of the external face (4) of the calotte (2),
**characterised in that** the external face (4) of the calotte (2) has a textured free surface (5), the textured free surface (5) extending over the convex curved circumferential wall (15).

2. Method for obtaining a cooking utensil according to claim 1, **characterised in that** the mechanical finishing treatment comprises a finishing polishing of the burnishing type, without any prepolishing phase using abrasive particles.

3. Method for obtaining a cooking utensil according to claim 2, **characterised in that** it consists of using a sheet of textured stainless steel comprising, on the textured face (1), a surface oxide layer procuring interferential colouring, and carrying out the mechanical finishing treatment in order to remove the surface oxide layer on the parts in relief of the free surface of the external face (4) of the calotte (2), so as to leave the stainless steel showing.

4. Method for obtaining a cooking utensil according to claim 1, **characterised in that** it consists of producing an external coating (7) on the free surface of the external face (4) of the calotte (2), and **in that** the mechanical finishing treatment comprises brushing in order to remove the external coating (7) on the parts in relief of the free surface of the external face (4) of the calotte (2).

5. Method for obtaining a cooking utensil according to any of claims 1 to 4, **characterised in that** it consists of carrying out assembly by hot striking of the calotte (2) with an aluminium thermal diffusion plate (11) partially covering the external face (4) of the calotte (2), and carrying out the finishing mechanical treatment after assembly by the hot striking.

6. Method for obtaining a cooking utensil according to any of claims 1 to 5, **characterised in that** it consists of carrying out assembly by hot striking of the calotte (2) with an aluminium thermal diffusion plate (11) partially covering the external face (4) of the calotte (2) and with a stainless-steel bottom plate (12) covering the thermal diffusion plate (11), and carrying out the mechanical finishing treatment after the assembly by hot striking.

7. Method for obtaining a cooking utensil according to any of claims 1 to 6, **characterised in that** it consists of producing an internal coating (6) on the internal face (3) of the calotte (2) before the mechanical finishing treatment.

8. Method for obtaining a cooking utensil according to either claim 5 or claim 6 and claim 7, **characterised in that** it consists of producing the internal coating (6) on the internal face (3) of the calotte (2) after the assembly by hot striking.

9. Method for obtaining a cooking utensil according to any of claims 1 to 8, **characterised in that** it consists of using a circular blank forming a disc.

10. Cooking utensil, comprising a pressed stainless-steel calotte (2) having an internal face (3) and an external face (4), the external face (4) of the calotte (2) having a textured free surface (5), the external face (4) having a convex curved circumferential wall (15), the textured free surface (5) of which comprises polished protruding parts (8) made from stainless steel and hollow parts (9), **characterised in that** the textured free surface (5) extends over the convex curved circumferential wall (15).

11. Cooking utensil according to claim 10, **characterised in that** the convex curved circumferential wall (15) is extended and surrounded by a circumferential lateral wall (16) and **in that** the textured free surface (5) extends over the circumferential lateral wall (16).

12. Cooking utensil according to either claim 10 or claim 11, **characterised in that** the external face (4) of the calotte (2) has etching depths of between 20 and 100 µm.

13. Cooking utensil according to claim 12, **characterised in that** an aluminium thermal diffusion plate (11) partially covers the external face (4) of the calotte (2).

14. Cooking utensil according to claim 13, **characterised in that** a stainless-steel bottom plate (12) covers the thermal diffusion plate (11).

15. Cooking utensil according to claim 14, **characterised in that** the bottom plate (12) is made from ferritic stainless steel.

16. Cooking utensil according to any of claims 10 to 15, **characterised in that** the internal face (3) of the calotte (2) has an internal coating (6).

17. Cooking utensil according to any of claims 10 to 16, **characterised in that** the hollow parts (9) are coated and/or coloured.

18. Cooking utensil according to claim 17, **characterised in that** the hollow parts (9) have one of the following surfaces: PTFE coating, ceramic coating, lacquer, surface oxide layer procuring interferential colouring.

19. Cooking utensil according to any of claims 10 to 18, **characterised in that** the calotte (2) has a circular shape.

20. Cooking utensil according to any of claims 10 to 19, **characterised in that** it comprises at least one handle (13) mounted on the calotte (2).
